(19) Europäisches Patentamt
European Patent Office
Office européen des brevets

(11) EP 3 564 319 B1

(12) EUROPEAN PATENT SPECIFICATION

(45) Date of publication and mention of the grant of the patent:
**13.03.2024 Bulletin 2024/11**

(21) Application number: **17889402.8**

(22) Date of filing: **15.12.2017**

(51) International Patent Classification (IPC):
***C08L 77/00*** *(2006.01)* ***C08L 81/02*** *(2006.01)*
***C08L 77/02*** *(2006.01)* ***C08L 77/10*** *(2006.01)*
***C08K 5/20*** *(2006.01)* ***C08K 7/14*** *(2006.01)*
***C08L 77/06*** *(2006.01)* ***C08K 5/5313*** *(2006.01)*
***C08K 5/17*** *(2006.01)* *C08G 69/26* *(2006.01)*

(52) Cooperative Patent Classification (CPC):
(C-Sets available)
**C08K 5/5313; C08K 5/175; C08K 7/14;**
**C08L 81/02;** C08G 69/265 (Cont.)

(86) International application number:
**PCT/KR2017/014816**

(87) International publication number:
**WO 2018/124565 (05.07.2018 Gazette 2018/27)**

(54) **POLYAMIDE RESIN COMPOSITION AND MOLDED ARTICLE PRODUCED THEREFROM**

POLYAMID ZUSAMMENSETZUNG UND DARAUS HERGESTELLTER FORMARTIKEL

COMPOSITION DE RÉSINE DE POLYAMIDE ET ARTICLE MOULÉ PRODUIT À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2016 KR 20160184167**

(43) Date of publication of application:
**06.11.2019 Bulletin 2019/45**

(73) Proprietor: **Lotte Advanced Materials Co., Ltd.**
**Yeosu-si, Jeollanam-do 59616 (KR)**

(72) Inventors:
- **KIM, Ik Mo**
**Uiwang-Si**
**Gyeonggi-do 16073 (KR)**
- **KIM, Kyung Rae**
**Uiwang-Si**
**Gyeonggi-do 16073 (KR)**
- **SHIN, Chan Gyun**
**Uiwang-Si**
**Gyeonggi-do 16073 (KR)**
- **HONG, Sang Hyun**
**Uiwang-Si**
**Gyeonggi-do 16073 (KR)**

(74) Representative: **Germain Maureau**
**12, rue Boileau**
**69006 Lyon (FR)**

(56) References cited:
**KR-A- 20020 042 217**
**KR-A- 20030 027 219**
**KR-A- 20140 086 795**
**KR-A- 20150 073 093**
**KR-A- 20160 075 371**
**US-A1- 2009 275 683**
**US-A1- 2012 196 962**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 564 319 B1

(52) Cooperative Patent Classification (CPC): (Cont.)

C-Sets
**C08L 77/06, C08K 7/14, C08K 5/5313, C08L 77/02, C08L 81/02, C08K 5/20**

## Description

### Technical Field

The present invention relates to a polyamide resin composition and a molded article produced therefrom. More particularly, the present invention relates to a polyamide resin composition having good properties in terms of long-term heat stability, flame retardancy and electrical characteristics, and a molded article including the same.

### Background Art

As polyamide resins (Nylon), aliphatic polyamide resins, such as PA66, PA6, and the like, and aromatic polyamide resins, such as PA6T, PA6I, and the like are well known in the art. Such polyamide resins are broadly used in various fields including automobile components, electric products, electronic products, and machinery components.

US 2009/275683 A1 refers to a a flame retardant thermoplastic resin composition that includes about 100 parts by weight of a mixed resin (A) including 10 to 90 wt % of an aromatic polyamide resin (A-1) and 10 to 90 wt % of a polyphenylene sulfide resin (A-2), 0.5 to 30 parts by weight of a phosphinic acid metal salt flame retardant (B), and 10 to 100 parts by weight of a filler (C).

US 2012/196962 A1 refers to a thermoplastic melt-mixed composition including a) a polyamide resin; b) 1.0 to 5.0 weight percent of an amino acid thermal stabilizer; c) 10 to 60 weight percent reinforcing agent; and, optionally, 0 to 30 weight percent polymeric toughener; and molded or extruded thermoplastic articles made therefrom.

In the automobile industry, metal components are being replaced by plastic components in order to achieve weight reduction. In particular, peripheral components of an engine compartment (i.e., under-the-hood components) are exposed to a high temperature environment for a long period of time and thus are manufactured using a polyamide resin composition having excellent heat resistance.

In recent years, the number of vehicles employing a turbocharger increases together with downsizing of engines in an attempt to reduce fuel consumption in the automobile industry. In an automobile employing a high power turbocharger, since the temperature in the engine compartment increases significantly, there is demand for a material having a higher level of heat resistance for components in the engine compartment such that the components can withstand a high temperature environment for a long period of time.

Generally, organic antioxidants such as phenol or phosphite-based antioxidants are widely used in order to secure high long-term heat stability of a polyamide resin composition. However, there is a limitation in maintaining good properties at high temperature over a long period of time.

Moreover, although copper halide heat stabilizers, such as a CuI/KI mixture, which is known to have good long-term heat stability at high temperature as compared with organic antioxidants, is used in the art, copper is likely to discolor or precipitate over time, causing various problems when used in electrical, electronic and automotive components.

Moreover, although there is a method of applying an aliphatic acid-based heat stabilizer, this method provides negative colorability due to a yellowing tendency of the heat stabilizer and can be restrictively applied to black color-based products.

Therefore, there is a need for a polyamide resin composition that can retain high heat stability even when exposed to high temperature for a long period of time.

The background technique of the present invention is disclosed in Korean Patent Laid-open Publication No. 10-2010-0018542.

### Disclosure

### Technical Problem

It is an object of the prevent invention to provide a thermoplastic resin composition that has good properties in terms of long-term heat stability for retaining mechanical strength for a long period of time, flame retardancy and electrical characteristics, and a molded article produced therefrom.

The above and other objects of the present invention can be achieved by the present invention described below.

### Technical Solution

One aspect of the present invention relates to a thermoplastic resin composition including: 30% by weight (wt%) to 50 wt% of (A) an aromatic polyamide resin; 1 wt% to 10 wt% of (B) an aliphatic polyamide resin; 1 wt% to 15 wt% of (C) a polyphenylene sulfide resin; 10 wt% to 20 wt% of (D) a phosphorus flame retardant; 0.1 wt% to 5 wt% of (E) a

chelating agent; and 30 wt% to 50 wt% of (F) glass fibers; wherein the aromatic polyamide resin (A) and the aliphatic polyamide resin (B) are present in a weight ratio of 3:1 to 23:1.

The aromatic polyamide resin (A) may include: a dicarboxylic acid unit including 10 mol% to 100 mol% of an aromatic dicarboxylic acid unit; and a diamine unit including at least one of an aliphatic diamine unit and an alicyclic diamine unit.

The aromatic polyamide resin (A) may include at least one of a polyamide (PA6T/66) composed of hexamethylene terephthalamide and hexamethylene adipamide and a polyamide (PA6T/DT) composed of hexamethylene terephthalamide and 2-methylpentamethylene terephthalamide.

The aliphatic polyamide resin (B) may include at least one of polyamide 6 and polyamide 66.

The aromatic polyamide resin (A) and the aliphatic polyamide resin (B); and the polyphenylene sulfide resin (C) may be present in a weight ratio of 3:1 to 50:1.

The phosphorus flame retardant (D) may include at least one of red phosphorus, a phosphate compound, a phosphonate compound, a phosphinate compound, a phosphine oxide compound, a phosphazene compound, and metal salts thereof.

The chelating agent (E) may include at least one metal ion of sodium (Na), aluminum (Al), iron (Fe), copper (Cu), zinc (Zn), tin (Sn), titanium (Ti), nickel (Ni), antimony (Sb), magnesium (Mg), vanadium (V), chromium (Cr), and zirconium (Zr) ions.

The chelating agent (E) may include at least one of ethylenediamine-N,N,N',N'-tetraacetic acid (EDTA), ethylene glycol bis(2-aminoethylether)-N,N,N',N'-tetraacetic acid (EGTA), trans-1,2-diaminocyclohexane-N,N,N',N'-tetraacetic acid (CyDTA), diethylene triamine pentaacetic acid (DTPA), triethylenetetraamine-N,N,N',N'',N''',N'''-hexaacetic acid (TETHA), N-(2-hydroxyethyl)ethylenediamine triacetic acid (HEDTA), and metal salts thereof.

The glass fibers (C) may have an aspect ratio of 1 to 1.5 in cross-section.

Another aspect of the present invention relates to a molded article formed of the thermoplastic resin composition, as set forth above.

The molded article may have tensile strength satisfying Relation 1.

[Relation 1]

$$1{,}500\ \text{kgf/cm}^2 \leq \text{TS} \leq 2{,}500\ \text{kgf/cm}^2,$$

where TS indicates tensile strength ($kgf/cm^2$) of the molded article, as measured at a tensile rate of 5 mm/min in accordance with ASTM D638.

The molded article may have a tensile strength retention ratio of 70% or more after aging at 200°C for 500 hours, as calculated by Equation 2.

[Equation 2]

$$\text{Tensile strength retention ratio (\%)} = \left| (\text{TS2} - \text{TS1}) \right| \times 100,$$

where TS1 indicates initial tensile strength ($kgf/cm^2$) of a specimen, as measured at 5 mm/min in accordance with ASTM D638, and TS2 indicates tensile strength ($kgf/cm^2$) of the specimen, as measured at 5 mm/min in accordance with ASTM D638 after aging the specimen at 200°C for 500 hours.

The molded article may have a flame retardancy of V-0 or higher, as measured on a 3.2 mm thick specimen in accordance with the UL-94 standard.

The molded article may have a comparison tracking index (CTI) of 250 V or more, as measured on a 3 mm thick specimen in accordance with the IEC 60112 standard.

The molded article may have an insulation fracture strength of 30 kV/mm to 45 kV/mm, as measured on a 1 mm thick specimen in accordance with ASTM D149.

## Advantageous Effects

The present invention provides a thermoplastic resin composition that has good properties in terms of long-term heat stability for retaining mechanical strength for a long period of time, flame retardancy, and electrical characteristics.

Best Mode

One aspect of the present invention relates to a thermoplastic resin composition including: 30 wt% to 50 wt% of (A) an aromatic polyamide resin; 1 wt% to 10 wt% of (B) an aliphatic polyamide resin; 1 wt% to 15 wt% of (C) a polyphenylene sulfide resin; 10 wt% to 20 wt% of (D) a phosphorus flame retardant; 0.1 wt% to 5 wt% of (E) a chelating agent; and 30 wt% to 50 wt% of (F) glass fibers. As a result, the present invention can provide a thermoplastic resin composition that has good properties in terms of long-term heat stability for retaining mechanical strength for a long period of time, flame retardancy, and electrical characteristics.

(A) Aromatic polyamide resin

The aromatic polyamide resin (A) according to the embodiment may be a homopolymer, a copolymer, a ternary copolymer, or a higher order polymer, which is formed of an aromatic group-containing monomer, and the term "copolymer" refers to a polyamide having two or more amide and/or diamide repeat units.

The aromatic polyamide resin has a structure in which an aromatic compound is contained in a main chain and may be obtained by polycondensation of a dicarboxylic acid monomer containing 10 mol% to 100 mol% of an aromatic dicarboxylic acid with a diamine monomer including an aliphatic diamine and/or an alicyclic diamine. For example, the aliphatic diamine and/or the alicyclic diamine may have 4 to 20 carbon atoms, and the aromatic dicarboxylic acid contains an aromatic benzene ring and may include terephthalic acid, isophthalic acid, or a combination thereof.

In other words, the aromatic polyamide resin may contain: a dicarboxylic acid unit including 10 mol% to 100 mol% of an aromatic dicarboxylic acid unit; and a diamine unit including at least one of an aliphatic diamine unit and an alicyclic diamine unit, as repeat units.

In some embodiments, the aromatic dicarboxylic acid unit may be derived from terephthalic acid, isophthalic acid, 2,6-naphthalenedicarboxylic acid, 2,7-naphthalenedicarboxylic acid, 1,4-naphthalenedicarboxylic acid, 1,4-phenylenedioxyphenylene acid, 1,3-phenylenedioxydiacetic acid, diphenic acid, 4,4'-oxybis(benzoic acid), diphenylmethane-4,4'-dicarboxylic acid, diphenylsulfone-4,4'-dicarboxylic acid, 4,4'-biphenyldicarboxylic acid, and combinations thereof.

In some embodiments, the dicarboxylic acid unit may further include a unit derived from a non-aromatic dicarboxylic acid in addition to the aromatic dicarboxylic acid unit. The non-aromatic dicarboxylic acid may include aliphatic and/or alicyclic dicarboxylic acids. For example, the non-aromatic dicarboxylic acid unit may be derived from aliphatic dicarboxylic acids, such as malonic acid, dimethyl malonic acid, succinic acid, glutaric acid, adipic acid, 2-methyladipic acid, trimethyladipic acid, pimelic acid, 2,2-dimethylglutaric acid, 2,2-diethyl succinic acid, azelaic acid, sebacic acid, and suberic acid; alicyclic dicarboxylic acids, such as 1,3-cyclopentane dicarboxylic acid and 1,4-cyclohexane dicarboxylic acid; and combinations thereof.

In some embodiments, the non-aromatic dicarboxylic acid unit may be present in an amount of 90 mol% or less, for example, 80 mol% or less, specifically 70 mol% or less, more specifically 60 mol% or less, based on 100 mol% of the dicarboxylic acid unit.

In some embodiments, the diamine unit may be derived from aliphatic and/or alicyclic diamines. Examples of the aliphatic and/or alicyclic diamines may include tetramethylenediamine, hexamethylenediamine, 2-methylpentamethylenediamine, nonamethylenediamine, undecamethylenediamine, dodecamethylenediamine, 2,2,4-trimethylhexamethylenediamine, 2,4,4-trimethylhexamethylenediamine, 5-methylnonamethylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine, bis(p-aminocyclohexyl)methane, 2-methyloctamethylenediamine, trimethylhexamethylenediamine, 1,8-diaminooctane, 1,9-diaminononane, 1,10-diaminodecane, 1,12-diaminododecane, and combinations thereof.

In some embodiments, the aromatic polyamide resin may include a polyamide (PA6T/66) composed of hexamethylene terephthalamide and hexamethylene adipamide, a polyamide (PA6T/DT) composed of hexamethylene terephthalamide and 2-methylpentamethylene terephthalamide, or a combination thereof. For example, the aromatic polyamide resin may be PA6T/66.

In some embodiments, the aromatic polyamide resin may have a glass transition temperature (Tg) of 80°C to 150°C, specifically 85°C to 140°C, for example, 85°C, 90°C, 95°C, 100°C, 105°C, 110°C, 115°C, 125°C, 130°C, 135°C, or 140°C. Within this range, the aromatic polyamide resin can provide high heat resistance.

In some embodiments, the molecular weight of the aromatic polyamide resin is not particularly limited, and the aromatic polyamide resin may have an intrinsic viscosity (IV) of 0.75 dL/g or higher, specifically 0.75 dL/g to 1.15 dL/g, for example, 0.75 dL/g, 0.8 dL/g, 0.85 dL/g, 0.9 dL/g, 0.95 dL/g, 1 dL/g, 1.05 dL/g, 1.1 dL/g, or 1.15 dL/g, as measured using an UBBELOHDE viscometer in a sulfuric acid solution at 25°C.

In some embodiments, the aromatic polyamide resin may be present in an amount of 30 wt% to 50 wt%,

specifically 30 wt% to 45 wt%, for example, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, or 45 wt%, based on the total weight of the thermoplastic resin composition. If the content of the aromatic polyamide resin exceeds 50 wt%, there can be a problem of deterioration in flame retardancy, and if the content of the aromatic polyamide resin is less than 30 wt%, there is a problem of deterioration in formability and heat resistance.

(B) Aliphatic polyamide resin

The aliphatic polyamide resin (B) according to the embodiment is a polyamide having no aromatic ring in a molecular chain and may contain a $C_{10}$ to $C_{20}$ aliphatic group.

In some embodiments, the aliphatic polyamide resin may be a homopolymer, a copolymer, a ternary copolymer, or a higher order polymer, which is formed of aminocarboxylic acid, lactam or diamine, and dicarboxylic acid. Here, the term "copolymer" refers to a polyamide having two or more amide and/or diamide repeat units.

In some embodiments, the aminocarboxylic acid may be a $C_6$ to $C_{12}$ aminocarboxylic acid and may include, for example, 6-aminocaproic acid, 7-aminoheptanoic acid, 9-aminononanoic acid, 11-aminoundecanoic acid, 12-aminododecanoic acid, and combinations thereof.

In some embodiments, the lactam may be a $C_4$ to $C_{12}$ lactam and may include, for example, α-pyrrolidone, ε-caprolactam, ω-laurolactam, ε-enantolactam, and combinations thereof.

In some embodiments, the diamine may be an aliphatic or alicyclic diamine and may include, for example, tetramethylenediamine, hexamethylenediamine, 2-methylpentamethylenediamine, nonamethylenediamine, undecamethylenediamine, dodecamethylenediamine, 2,2,4-trimethylhexamethylenediamine, 2,4,4-trimethylhexamethylenediamine, 5-methylnonamethylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethylpiperazine, bis(p-aminocyclohexyl)methane, 2-methyloctamethylenediamine, trimethylhexamethylenediamine, 1,8-diaminooctane, 1,9-diaminononane, 1,10-diaminodecane, 1,12-diaminododecane, and combinations thereof.

In some embodiments, the dicarboxylic acid may be an aliphatic and/or alicyclic dicarboxylic acid and may include, for example, adipic acid, 2-methyladipic acid, trimethyladipic acid, glutaric acid, 2,2-dimethylglutaric acid, pimelic acid, suberic acid, azelaic acid, sebacic acid, dodecanedioic acid, 1,4-cyclohexanedicarboxylic acid, malonic acid, dimethylmalonic acid, succinic acid, 2,2-diethylsuccinic acid, and combinations thereof.

In some embodiments, the aliphatic polyamide resin may be of polyamide 6, polyamide 66, polyamide 46, polyamide 610, polyamide 612, polyamide 11, polyamide 12, polyamide 910, polyamide 912, polyamide 913, polyamide 914, polyamide 915, polyamide 616, polyamide 936, polyamide 1010, polyamide 1012, polyamide 1013, polyamide 1014, polyamide 1210, polyamide 1212, polyamide 1213, polyamide 1214, polyamide 614, polyamide 613, polyamide 615, polyamide 616, and the like. These may be used alone or as a mixture thereof. For example, the aliphatic polyamide resin may be polyamide 6, polyamide 66, or a mixture thereof.

In some embodiments, the aliphatic polyamide resin may have a glass transition temperature (Tg) of 30°C to 100°C, specifically 30°C to 80°C, for example, 30°C, 40°C, 50°C, 60°C, 70°C, or 80°C, and a melting point (Tm) of 160°C to 280°C, for example, 160°C, 170°C, 180°C, 190°C, 200°C, 210°C, 220°C, 230°C, 240°C, 250°C, 260°C, 270°C, or 280°C. Within this range, the thermoplastic resin composition can have good properties in terms of impact strength and processability.

In some embodiments, the aliphatic polyamide resin may have a number average molecular weight (Mn) of 10,000 g/mol to 200,000 g/mol, specifically 20,000 g/mol to 150,000 g/mol, for example, 20,000 g/mol, 25,000 g/mol, 30,000 g/mol, 35,000 g/mol, 40,000 g/mol, 45,000 g/mol, 50,000 g/mol, 55,000 g/mol, 60,000 g/mol, 65,000 g/mol, 70,000 g/mol, 75,000 g/mol, 80,000 g/mol, 85,000 g/mol, 90,000 g/mol, 95,000 g/mol, 100,000 g/mol, 105,000 g/mol, 110,000 g/mol, 115,000 g/mol, 120,000 g/mol, 125,000 g/mol, 130,000 g/mol, 135,000 g/mol, 140,000 g/mol, 145,000 g/mol, or 150,000 g/mol, without being limited thereto.

In some embodiments, the aliphatic polyamide resin may be present in an amount of 1 wt% to 10 wt%, specifically 2 wt% to 8 wt%, for example, 2 wt%, 3 wt%, 4 wt%, 5 wt%, 6 wt%, 7 wt%, or 8 wt%, based on the total weight of the thermoplastic resin composition. If the content of the aliphatic polyamide resin exceeds 10 wt%, the thermoplastic resin composition can suffer from deterioration in heat resistance, and if the content of the aliphatic polyamide resin is less than 1 wt%, the thermoplastic resin composition can suffer from deterioration in long-term heat resistance.

The thermoplastic resin composition includes the aromatic polyamide resin and the aliphatic polyamide resin in a weight ratio (aromatic polyamide resin:aliphatic polyamide resin) of 3:1 to 23:1, specifically 3:1 to 6:1, for example, 3:1, 4:1, 5:1, or 6:1. Within this range of weight ratio, the thermoplastic resin composition can have further improved long-term heat stability and can have good processability during extrusion.

(C) Polyphenylene sulfide resin

According to one embodiment of the invention, the polyphenylene sulfide resin (C) is a thermoplastic resin and may be a polymer containing a polymerization material of p-dichlorobenzene and sodium sulfide. Such a polyphenylene sulfide resin can realize heat resistance at high temperature and good mechanical properties over a broad temperature range while maintaining substantially the same properties as the properties at room temperature even at a low temperature of -50°C. In addition, the polyphenylene sulfide resin is a harmless resin without toxicity and can further improve flame retardancy of a thermoplastic resin.

In some embodiments, the polyphenylene sulfide resin may include a repeat unit represented by Formula 1.

[Formula 1]

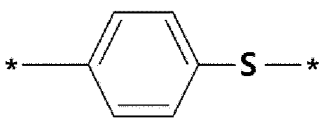

In some embodiments, the repeat unit represented by Formula 1 may be present in an amount of 50 mol% or more, specifically 70 mol% or more, in the polyphenylene sulfide resin. Within this range, the polyphenylene sulfide resin has a high degree of crystallization and can exhibit further improvement in heat resistance and rigidity. In this formula, * means a linking site.

In some embodiments, the polyphenylene sulfide resin may further include a repeat unit derived from dihalogenated benzene, such as p-dichlorobenzene, o-dichlorobenzene, m-dichlorobenzene, p-dibromobenzene, o-dibromobenzene, m-dibromobenzene, 1-bromo-4-chlorobenzene, and 1-bromo-3-chlorobenzene, 1-methoxy-2,5-dichlorobenzene, 1-methyl-2,5-dichlorobenzene, 1,4-dimethyl-2,5-dichlorobenzene, 1,3-dimethyl-2,5-dichlorobenzene, or 3,5-dichlorobenzoic acid, in addition to the repeat unit represented by Formula 1.

The polyphenylene sulfide resin may be present in an amount of 1 wt% to 15 wt%, specifically 1 wt% to 12 wt%, for example, 1 wt%, 2 wt%, 3 wt%, 4 wt%, 5 wt%, 6 wt%, 7 wt%, 8 wt%, 9 wt%, 10 wt%, 11 wt%, or 12 wt%, based on the total weight of the thermoplastic resin composition. If the content of the polyphenylene sulfide resin is less than 1 wt%, the thermoplastic resin composition can suffer from deterioration in flame retardancy, and if the content of the polyphenylene sulfide resin exceeds 15 wt%, the thermoplastic resin composition can suffer from deterioration in electrical characteristics.

(D) Phosphorus flame retardant

The phosphorus flame retardant according to the present invention may be selected from any typical phosphorus flame retardants used for a flame retardant thermoplastic resin composition. For example, the phosphorus flame retardant may be of red phosphorus, a phosphate compound, a phosphonate compound, a phosphinate compound, a phosphine oxide compound, a phosphazene compound, and metal salts thereof. These phosphorus flame retardants may be used alone or as a mixture thereof.

In some embodiments, the phosphorus flame retardant may include at least one selected from the group consisting of triphenyl phosphate, ammonium polyphosphate (phase II), melamine phosphate, resorcinol-di (bis-2,6-dimethylphenyl) phosphate, bisphenol A diphenyl phosphate, cyclophosphazene, aluminum diethyl phosphinate, diethyl phosphinate ammonium salt, and combinations thereof, without being limited thereto.

The phosphorus flame retardant may be present in an amount of 10 wt% to 20 wt%, specifically 10 wt% to 15 wt%, for example, 10 wt%, 11 wt%, 12 wt%, 13 wt%, 14 wt%, or 15 wt%, based on the total weight of the thermoplastic resin composition. If the content of the phosphorus flame retardant is less than 10 wt%, the thermoplastic resin composition can suffer from deterioration in flame retardancy, and if the content of the phosphorus flame retardant exceeds 20 wt%, the thermoplastic resin composition can suffer from deterioration in electrical characteristics.

(E) Chelating agent

The thermoplastic resin composition according to the present invention includes the chelating agent to prevent penetration of an oxide layer into the thermoplastic resin and thus decomposition of the thermoplastic resin by promoting formation of char on the surface of the resin composition through oxidation of the surface of the resin composition during aging at high temperature, thereby improving long-term heat stability of the thermoplastic resin.

The chelating agent may include at least one of carboxylic acid or a salt thereof; and an amino group. The

chelating agent is a compound containing a functional group capable of forming a bond with a metal ion and can be bonded to cations of a dissociated metal salt to form a stabilized chelate complex.

In some embodiments, the chelating agent may be any one or a mixture of polyvalent carboxyl group-containing compounds. For example, the chelating agent is polycarboxylic acid or a carboxylate group-containing compound, specifically a compound containing a functional group represented by Formula 2a, 2b, or 2c.

[Formula 2a]

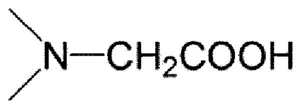

[Formula 2b]

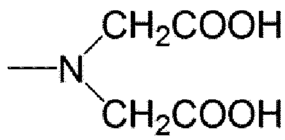

[Formula 2c]

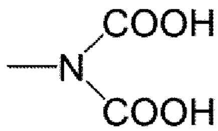

Examples of the compound containing the functional group represented by Formula 2a, 2b, or 2c may include ethylenediamine-N,N,N’,N’-tetraacetic acid (EDTA), ethylene glycol bis(2-aminoethylether)-N,N,N’,N’-tetraacetic acid (EGTA), trans-1,2-diaminocyclohexane-N,N,N’,N’-tetraacetic acid (CyDTA), diethylene triamine pentaacetic acid (DTPA), triethylenetetraamine-N,N,N’,N",N‴,N‴-hexaacetic acid (TETHA), N-(2-hydroxyethyl)ethylenediamine triacetic acid (HEDTA), and metal salts thereof. These may be used alone or as a mixture thereof.

In some embodiments, the metal ion forming the bond in the chelating agent may include at least one of sodium (Na), aluminum (Al), iron (Fe), copper (Cu), zinc (Zn), tin (Sn), titanium (Ti), nickel (Ni), antimony (Sb), magnesium (Mg), vanadium (V), chromium (Cr), and zirconium (Zr) ions. It should be understood that the present invention is not limited thereto and the metal ion may include any metal ion providing the aforementioned effects. For example, the chelating agent may be ethylenediamine tetraacetic acid-disodium salt (EDTA-2Na).

In some embodiments, the chelating agent may be present in an amount of 0.1 wt% to 5 wt%, for example, 0.1 wt%, 1 wt%, 2 wt%, 3 wt%, 4 wt%, or 5 wt%, based on the total weight of the thermoplastic resin composition. If the content of the chelating agent is less than 0.1 wt%, the thermoplastic resin composition can suffer from deterioration in long-term heat resistance, and if the content of the chelating agent exceeds 5 wt%, the thermoplastic resin composition can suffer from deterioration in processability.

(F) Glass fiber

The glass fibers according to the present invention serve to improve mechanical strength of the thermoplastic resin composition.

In some embodiments, the glass fibers may have a diameter of 8 µm to 20 µm, for example, 8 µm, 9 µm, 10 µm, 11 µm, 12 µm, 13 µm, 14 µm, 15 µm, 16 µm, 17 µm, 18 µm, 19 µm, or 20 µm, and a length of 1.5 mm to 8 mm, for example, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, or 8.5 mm. When the diameter of the glass fibers falls within this range, the glass fibers can provide high strength reinforcement, and, when the length of the glass fibers falls within this range, the resin composition can be easily introduced into a processing machine such as an extruder while having further improved mechanical strength.

In some embodiments, the glass fiber may have a circular shape, oval shape, rectangular shape, or dumbbell-like shape having two circles connected to each other in cross-section.

In some embodiments, the glass fibers may have an aspect ratio of 1 to 1.5, for example, 1.0, 1.1, 1.2, 1.3, 1.4, or 1.5, in cross-section, and may be, for example, glass fibers having a circular shape and an aspect ratio of 1 in cross-section. Herein, the term "aspect ratio" is defined as a ratio of the longest diameter of the glass fiber to the smallest diameter of the glass fiber in cross-section. With the glass fibers having an aspect ratio within the above range, the thermoplastic resin composition can reduce cost of products and provide good properties in terms of dimensional stability and external appearance.

In some embodiments, the glass fibers may be surface-treated with a sizing material in order to prevent reaction with a resin and improve a degree of impregnation. Here, surface treatment may be performed during manufacture of the glass fibers or during post-processing.

By way of example, glass fiber filaments are preferably coated with a sizing material to protect the filaments from friction throughout the process of fabricating the glass fibers or to allow the glass fibers to be easily bonded to a resin.

In some embodiments, the glass fibers may be present in an amount of 30 wt% to 50 wt%, for example, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, or 50 wt%, based on the total weight of the thermoplastic resin composition. If the content of the glass fibers is less than 30 wt%, the thermoplastic resin composition can suffer from deterioration in initial properties, and if the content of the glass fibers exceeds 50 wt%, the thermoplastic resin composition can suffer from deterioration in processability.

According to the present invention, the thermoplastic resin composition may further include an additive, as needed.

Examples of the additive may include a lubricant, a plasticizer, a heat stabilizer, an antioxidant, a light stabilizer, a colorant, an antibacterial agent, a release agent, and an antistatic agent. These may be used alone or as a mixture thereof depending on properties of a molded article formed of the resin composition.

The lubricant serves to lubricate a surface of metal contacting the thermoplastic resin composition during processing, molding, or extrusion to facilitate flow or movement of the resin composition and may include any typical lubricant known in the art.

The plasticizer serves to increase flexibility, workability or extensibility of the thermoplastic resin composition and may include any typical plasticizer known in the art.

The heat stabilizer serves to inhibit thermal decomposition of the thermoplastic resin composition during kneading or molding at high temperature and may include any typical heat stabilizer known in the art.

The antioxidant serves to inhibit or block chemical reaction between the thermoplastic resin composition and oxygen to prevent the resin composition from decomposing and losing inherent physical properties and may include at least one of phenol, phosphite, thioether, and amine antioxidants, without being limited thereto.

The light stabilizer serves to inhibit or prevent UV-induced decomposition and thus discoloration or loss of mechanical properties of the thermoplastic resin composition and is preferably titanium oxide.

The colorant may include any typical pigments or dyes known in the art.

In some embodiments, the additive may be present in an amount of 0.1 parts by weight to 15 parts by weight, for example, 0.1 parts by weight, 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, or 15 parts by weight, relative to 100 parts by weight of the thermoplastic resin composition.

In some embodiments, the thermoplastic resin composition may be prepared by any suitable method known in the art. For example, the aforementioned components and, optionally, other additives are mixed, followed by melt extrusion in an extruder, thereby preparing the thermoplastic resin composition in pellet form.

A molded article according to the present invention may be formed of the thermoplastic resin composition according to the present invention, as set forth above. The molded article according to the present invention has good properties in terms of long-term heat stability, flame retardancy, and electrical characteristics.

The molded article may have tensile strength satisfying Relation 1.

[Relation 1]

$$1{,}500\ \mathrm{kgf/cm^2} \leq \mathrm{TS} \leq 2{,}500\ \mathrm{kgf/cm^2},$$

where TS indicates tensile strength ($kgf/cm^2$) of the molded article, as measured at a tensile rate of 5 mm/min in accordance with ASTM D638.

The molded article may have a tensile strength retention ratio of 70% or more after aging at 200°C for 500 hours, as calculated by Equation 2.

[Equation 2]

$$\text{Tensile strength retention ratio (\%)} = |(TS2 - TS1)| \times 100,$$

where TS1 indicates initial tensile strength ($kgf/cm^2$) of a specimen, as measured at 5 mm/min in accordance with ASTM D638, and TS2 indicates tensile strength ($kgf/cm^2$) of the specimen, as measured at 5 mm/min in accordance with ASTM D638 after aging the specimen at 200°C for 500 hours.

The molded article may have a flame retardancy of V-0 or higher, as measured on a 3.2 mm thick specimen in accordance with the UL-94 standard.

The molded article may have a comparison tracking index (CTI) of 250 V or more, for example, 250V, 300V, 350V, 400V, 450V, 500V, 550V, or 600V, as measured on a 3 mm thick specimen in accordance with the IEC 60112 standard.

The molded article may have an insulation fracture strength of 30 kV/mm to 45 kV/mm, for example, 30 kV/mm, 31 kV/mm, 32 kV/mm, 33 kV/mm, 34 kV/mm, 35 kV/mm, 36 kV/mm, 37 kV/mm, 38 kV/mm, 39 kV/mm, 40 kV/mm, 41 kV/mm, 42 kV/mm, 43 kV/mm, 44 kV/mm, or 45 kV/mm, as measured on a 1 mm thick specimen in accordance with ASTM D149.

The molded article is useful in fields requiring long-term heat stability and may be used as, for example, an under-the-hood component for automobile engines. In addition, the molded article may be a battery fuse, turbo resonator, or intercooler tank for automobiles.

Next, the present invention will be described in more detail with reference to some examples. It should be understood that these examples are provided for illustration only and are not to be in any way construed as limiting the present invention.

Mode for Invention

## EXAMPLE

Details of components used in thermoplastic resin compositions of Examples and Comparative Examples are as follows.

(A) Aromatic polyamide resin
PA6T/66 (A6000, Solvay Advanced Polymers L.L.C.) was used.
(B) Aliphatic polyamide resin
Polyamide 6 (EN300, KP Chemtech Co., Ltd.) was used.
(C) Polyphenylene sulfide resin
B-042 (Tosoh Co., Ltd.) was used.
(D) Phosphorus flame retardant
Aluminum diethylphosphinate (OP-1240, Clariant Co., Ltd.) was used.
(E) Chelating agent
EDTA-2Na (NA2 Crystals, Dow Chemical) was used.
(F) Glass fiber
ECS03T-717H (NEG) was used.

### Examples 1 to 6 and Comparative Examples 1 to 7

The aforementioned components were placed in amounts as listed in Table 1 in a mixer, followed by dry-mixing. Then, the mixture was subjected to extrusion in a twin-screw extruder (L/D: 45, Φ: 45 mm) at a barrel temperature of 250°C to 350°C, thereby preparing thermoplastic resin compositions in pellet form. The prepared pellets were dried at 100°C for 4 hours and subjected to injection molding using a 10 oz. injection machine, thereby preparing specimens for property evaluation.

Property Evaluation

(1) Tensile strength (TS, $kgf/cm^2$): Tensile strength was measured at a tensile rate of 5 mm/min in accordance with

ASTM D638.

(2) Tensile strength retention ratio (%): After measurement of tensile strength in accordance with ASTM D638, tensile strength retention ratio was calculated by Equation 2.

[Equation 2]

$$\text{Tensile strength retention ratio (\%)} = \left| (TS2 - TS1) \right| \times 100,$$

where TS1 indicates initial tensile strength (kgf/cm$^2$) of a specimen, as measured at 5 mm/min in accordance with ASTM D638, and TS2 indicates tensile strength (kgf/cm$^2$) of the specimen, as measured at 5 mm/min in accordance with ASTM D638 after aging the specimen at 200°C for 500 hours.

(4) Flame retardancy: Flame retardancy was measured on a 3.2 mm thick specimen in accordance with the UL-94 standard.

(5) Voltage characteristics (V): Comparison tracking index was measured on a 3 mm thick specimen in accordance with the IEC 60112 standard.

(6) Insulation fracture strength (kV/mm): Insulation fracture strength was measured on a 1 mm thick specimen in accordance with ASTM D149.

Table 1

| | Example 1 | Example 2 | Example 3 | Example 4 | Example 5 | Example 6 |
|---|---|---|---|---|---|---|
| (A) | 45 | 41 | 35 | 30 | 39.9 | 39 |
| (B) | 2 | 8 | 8 | 8 | 8 | 8 |
| (C) | 3 | 1 | 3 | 12 | 3 | 3 |
| (D) | 14 | 14 | 14 | 14 | 14 | 14 |
| (E) | 1 | 1 | 5 | 1 | 0.1 | 1 |
| (F) | 35 | 35 | 35 | 35 | 35 | 35 |
| Tensile strength (kgf/cm$^2$) | 1,750 | 1,750 | 1,700 | 1,800 | 1,750 | 1,750 |
| Tensile strength retention ratio (%) | 70 | 71 | 78 | 76 | 71 | 75 |
| Flame retardancy | V-0 | V-0 | V-0 | V-0 | V-0 | V-0 |
| Voltage characteristics (V) | 600 | 600 | 600 | 600 | 600 | 600 |
| Insulation fracture strength (kV/mm) | 35 | 37 | 35 | 33 | 35 | 35 |

Table 2

| | Comp. Example 1 | Comp. Example 2 | Comp. Example 3 | Comp. Example 4 | Comp. Example 5 | Comp. Example 6 | Comp. Example 7 |
|---|---|---|---|---|---|---|---|
| (A) | 48 | 47 | 43 | 42 | 53 | - | 60 |
| (B) | - | - | 8 | 8 | 8 | - | 2 |
| (C) | 3 | 3 | - | - | 3 | 65 | 3 |
| (D) | 14 | 14 | 14 | 14 | - | - | 14 |
| (E) | - | 1 | - | 1 | 1 | - | 1 |
| (F) | 35 | 35 | 35 | 35 | 35 | 35 | 20 |

(continued)

| | Comp. Example 1 | Comp. Example 2 | Comp. Example 3 | Comp. Example 4 | Comp. Example 5 | Comp. Example 6 | Comp. Example 7 |
|---|---|---|---|---|---|---|---|
| Tensile strength ($kgf/cm^2$) | 1,800 | 1,750 | 1,700 | 1,680 | 1,800 | 1,800 | 1,200 |
| Tensile strength retention ratio (%) | 46 | 48 | 43 | 75 | 78 | 90 | 65 |
| Flame retardancy | V-0 | V-0 | V-1 | V-1 | HB | V-0 | V-1 |
| Voltage characteristics (V) | 600 | 600 | 600 | 600 | 600 | 125 | 600 |
| Insulation fracture strength (kV/mm) | 35 | 35 | 35 | 35 | 37 | 25 | 31 |

As can be seen from Table 1, the molded articles produced from the thermoplastic resin compositions of Example 1 to 6 had high tensile strength and high tensile strength retention ratios, and exhibited good properties in terms of flame retardancy, voltage characteristics, insulation fracture strength, and balance therebetween.

Conversely, the composition of Comparative Example 1 free from the aliphatic polyamide resin and the chelating agent, the composition of Comparative Example 2 free from the aliphatic polyamide resin, and the composition of Comparative Example 3 free from the polyphenylene sulfide resin and the chelating agent failed to secure long-term heat resistance due to significant reduction in tensile strength after aging at high temperature for a long period of time to provide a low tensile strength retention ratio. It was confirmed that the composition of Comparative Example 4 free from the polyphenylene sulfide resin and the composition of Comparative Example 5 free from the phosphorus flame retardant had a flame retardancy of less than V-0. The composition of Comparative Example 6 containing the polyphenylene sulfide resin and the glass fibers and free from the polyamide resin, the phosphorus flame retardant and the chelating agent exhibited low voltage characteristics and low insulation fracture strength.

Moreover, the composition of Comparative Example 7 prepared with a higher content of the aromatic polyamide resin and a lower content of glass fibers than the corresponding ranges of the present invention exhibited poorer properties in terms of tensile strength, tensile strength retention ratio and flame retardancy than the thermoplastic resin compositions of Examples.

## Claims

**1.** A thermoplastic resin composition comprising:

30 wt% to 50 wt% of (A) an aromatic polyamide resin;
1 wt% to 10 wt% of (B) an aliphatic polyamide resin;
1 wt% to 15 wt% of (C) a polyphenylene sulfide resin;
10 wt% to 20 wt% of (D) a phosphorus flame retardant;
0.1 wt% to 5 wt% of (E) a chelating agent; and
30 wt% to 50 wt% of (F) glass fibers;

wherein the aromatic polyamide resin (A) and the aliphatic polyamide resin (B) are present in a weight ratio of 3:1 to 23:1.

**2.** The thermoplastic resin composition according to claim 1, wherein the aromatic polyamide resin (A) comprises: a dicarboxylic acid unit comprising 10 mol% to 100 mol% of an aromatic dicarboxylic acid unit; and a diamine unit comprising at least one of an aliphatic diamine unit and an alicyclic diamine unit.

**3.** The thermoplastic resin composition according to claim 1, wherein the aromatic polyamide resin (A) comprises at

least one of a polyamide (PA6T/66) composed of hexamethylene terephthalamide and hexamethylene adipamide and a polyamide (PA6T/DT) composed of hexamethylene terephthalamide and 2-methylpentamethylene terephthalamide.

**4.** The thermoplastic resin composition according to claim 1, wherein the aliphatic polyamide resin (B) comprises at least one of polyamide 6 and polyamide 66.

**5.** The thermoplastic resin composition according to claim 1, wherein the aromatic polyamide resin (A) and the aliphatic polyamide resin (B); and the polyphenylene sulfide resin (C) are present in a weight ratio of 3:1 to 50: 1.

**6.** The thermoplastic resin composition according to claim 1, wherein the phosphorus flame retardant (D) comprises at least one of red phosphorus, a phosphate compound, a phosphonate compound, a phosphinate compound, a phosphine oxide compound, a phosphazene compound, and metal salts thereof.

**7.** The thermoplastic resin composition according to claim 1, wherein the chelating agent (E) comprises at least one metal ion of sodium (Na), aluminum (Al), iron (Fe), copper (Cu), zinc (Zn), tin (Sn), titanium (Ti), nickel (Ni), antimony (Sb), magnesium (Mg), vanadium (V), chromium (Cr), and zirconium (Zr) ions.

**8.** The thermoplastic resin composition according to claim 1, wherein the chelating agent (E) comprises at least one of ethylenediamine-N,N,N',N'-tetraacetic acid (EDTA), ethylene glycol bis(2-aminoethylether)-N,N,N',N'-tetraacetic acid (EGTA), trans-1,2-diaminocyclohexane-N,N,N',N'-tetraacetic acid (CyDTA), diethylene triamine pentaacetic acid (DTPA), triethylenetetraamine-N,N,N',N",N‴,N‴-hexaacetic acid (TETHA), N-(2-hydroxyethyl)ethylenediamine triacetic acid (HEDTA), and metal salts thereof.

**9.** The thermoplastic resin composition according to claim 1, wherein the glass fibers (F) have an aspect ratio of 1 to 1.5 in cross-section.

**10.** A molded article produced from the thermoplastic resin composition according to any one of claims 1 to 9.

**11.** The molded article according to claim 10, wherein the molded article has tensile strength satisfying Relation 1.

[Relation 1]

$$1{,}500\ \mathrm{kgf/cm^2} \leq \mathrm{TS} \leq 2{,}500\ \mathrm{kgf/cm^2},$$

where TS indicates tensile strength ($kgf/cm^2$) of the molded article, as measured at a tensile rate of 5 mm/min in accordance with ASTM D638.

**12.** The molded article according to claim 10, wherein the molded article has a tensile strength retention ratio of 70% or more after aging at 200°C for 500 hours, as calculated by Equation 2.

[Equation 2]

$$\text{Tensile strength retention ratio (\%)} = \left| (\mathrm{TS2} - \mathrm{TS1}) \right| \times 100,$$

where TS1 indicates initial tensile strength ($kgf/cm^2$) of a specimen, as measured at 5 mm/min in accordance with ASTM D638, and TS2 indicates tensile strength ($kgf/cm^2$) of the specimen, as measured at 5 mm/min in accordance with ASTM D638 after aging the specimen at 200°C for 500 hours.

**13.** The molded article according to claim 10, wherein the molded article has a flame retardancy of V-0 or higher, as measured on a 3.2 mm thick specimen in accordance with the UL-94 standard, and a comparison tracking index (CTI) of 250 V or more, as measured on a 3 mm thick specimen in accordance with the IEC 60112 standard.

**14.** The molded article according to claim 10, wherein the molded article has an insulation fracture strength of 30 kV/mm to 45 kV/mm, as measured on a 1 mm thick specimen in accordance with ASTM D149.

## Patentansprüche

1. Thermoplastische Harzzusammensetzung, umfassend:

   30 Gew.-% bis 50 Gew.-% eines (A) aromatischen Polyamidharzes;
   1 Gew.-% bis 10 Gew.-% eines (B) aliphatischen Polyamidharzes;
   1 Gew.-% bis 15 Gew.-% eines (C) Polyphenylensulfidharzes;
   10 Gew.-% bis 20 Gew.-% eines (D) Phosphor-Flammschutzmittels;
   0,1 Gew.-% bis 5 Gew.-% eines (E) chelatisierenden Mittels; und
   30 Gew.-% bis 50 Gew.-% von (F) Glasfasern;
   wobei das aromatische Polyamidharz (A) und das aliphatische Polyamidharz (B) in einem Gewichtsverhältnis von 3:1 bis 23:1 vorhanden sind.

2. Thermoplastische Harzzusammensetzung nach Anspruch 1, wobei das aromatische Polyamidharz (A) Folgendes umfasst: eine Dicarbonsäureeinheit, umfassend 10 Mol.-% bis 100 Mol.-% einer aromatischen Dicarbonsäureeinheit; und eine Diamineinheit, umfassend mindestens eine aliphatische Diamineinheit und eine alicyclische Diamineinheit.

3. Thermoplastische Harzzusammensetzung nach Anspruch 1, wobei das aromatische Polyamidharz (A) mindestens eines von einem Polyamid (PA6T/66), bestehend aus Hexamethylenterephthalamid und Hexamethylenadipamid, und einem Polyamid (PA6T/DT), bestehend aus Hexamethylenterephthalamid und 2-Methylpentamethylenterephthalamid, umfasst.

4. Thermoplastische Harzzusammensetzung nach Anspruch 1, wobei das aliphatische Polyamidharz (B) mindestens eines von Polyamid 6 und Polyamid 66 umfasst.

5. Thermoplastische Harzzusammensetzung nach Anspruch 1, wobei das aromatische Polyamidharz (A) und das aliphatische Polyamidharz (B); und das Polyphenylensulfidharz (C) in einem Gewichtsverhältnis von 3:1 bis 50:1 vorhanden sind.

6. Thermoplastische Harzzusammensetzung nach Anspruch 1, wobei das Phosphor-Flammschutzmittel (D) mindestens eines von rotem Phosphor, einer Phosphatverbindung, einer Phosphonatverbindung, einer Phosphinatverbindung, einer Phosphinoxidverbindung, einer Phosphazenverbindung und Metallsalzen davon umfasst.

7. Thermoplastische Harzzusammensetzung nach Anspruch 1, wobei das chelatbildende Mittel (E) mindestens ein Metallion von Natrium- (Na), Aluminium- (Al), Eisen- (Fe), Kupfer- (Cu), Zink- (Zn), Zinn- (Sn), Titan- (Ti), Nickel- (Ni), Antimon- (Sb), Magnesium- (Mg), Vanadium- (V), Chrom- (Cr) und Zirkonium- (Zr) Ionen umfasst.

8. Thermoplastische Harzzusammensetzung nach Anspruch 1, wobei das chelatbildende Mittel (E) mindestens eines von Ethylendiamin-N,N,N',N'-tetraessigsäure (EDTA), Ethylenglykolbis(2-aminoethylether)-N,N,N',N'-tetraessigsäure (EGTA), trans-1,2-Diaminocyclohexan-N,N,N',N'-tetraessigsäure (CyDTA), Diethylentriaminpentaessigsäure (DTPA), Triethylentetraamin-N,N,N',N",N‴,N‴-hexaessigsäure (TETHA), N-(2-Hydroxyethyl)ethylendiamintriessigsäure (HEDTA) und Metallsalze davon umfasst.

9. Thermoplastische Harzzusammensetzung nach Anspruch 1, wobei die Glasfasern (F) im Querschnitt ein Seitenverhältnis von 1 bis 1,5 aufweisen.

10. Formgegenstand, hergestellt aus der thermoplastischen Harzzusammensetzung nach einem der Ansprüche 1 bis 9.

11. Formgegenstand nach Anspruch 10, wobei der Formgegenstand eine Zugfestigkeit aufweist, die für die Beziehung 1 ausreicht.

[Beziehung 1]

$$1.500\ kgf/cm^2 \leq TS \leq 2.500\ kgf/cm^2,$$

wobei TS die Zugfestigkeit ($kgf/cm^2$) des Formgegenstands angibt, die bei einer Zuggeschwindigkeit von 5 mm/min gemäß ASTM D638 gemessen wurde.

**12.** Formgegenstand nach Anspruch 10, wobei der Formgegenstand nach der Alterung bei 200 °C für 500 Stunden ein Zugfestigkeitsverhältnis von 70 % oder mehr aufweist, berechnet nach Gleichung 2.

[Gleichung 2]

$$\text{Verhältnis zur Zugfestigkeit (\%)} = |(TS2 - TS1)| \times 100,$$

wobei TS1 die anfängliche Zugfestigkeit (kgf/$cm^2$) einer Probe angibt, die bei 5 mm/Min. gemäß ASTM D638 gemessen wurde, und TS2 die Zugfestigkeit (kgf/$cm^2$) der Probe angibt, die bei 5 mm/Min. gemäß ASTM D638 gemessen wurde, nachdem die Probe 500 Stunden lang bei 200 °C gealtert wurde.

**13.** Formgegenstand nach Anspruch 10, wobei der Formgegenstand eine Flammwidrigkeit von V-0 oder höher aufweist, gemessen an einer 3,2 mm dicken Probe gemäß der Norm UL-94, und einen Vergleichsverfolgungsindex (CTI) von 250 V oder mehr, gemessen an einer 3 mm dicken Probe gemäß der Norm IEC 60112.

**14.** Formgegenstand nach Anspruch 10, wobei der Formgegenstand eine Isolationsbruchfestigkeit von 30 kV/mm bis 45 kV/mm aufweist, gemessen an einer 1 mm dicken Probe gemäß ASTM D149.

**Revendications**

**1.** Composition de résine thermoplastique comprenant :

30% en poids à 50% en poids d'une résine polyamide aromatique (A) ;
1% en poids à 10% en poids d'une résine polyamide aliphatique (B) ;
1% en poids à 15% en poids d'une résine de sulfure de polyphénylène (C) ;
10% en poids à 20% en poids d'un agent ignifuge à base de phosphore (D) ;
0,1% en poids à 5% en poids d'un agent chélateur (E) ; et
30% en poids à 50% en poids de fibres de verre (F) ;
dans laquelle la résine polyamide aromatique (A) et la résine polyamide aliphatique (B) sont présentes dans un rapport pondéral allant de 3 : 1 à 23 : 1.

**2.** Composition de résine thermoplastique selon la revendication 1, dans laquelle la résine polyamide aromatique (A) comprend : une unité acide dicarboxylique comprenant 10% en moles à 100% en moles d'une unité acide dicarboxylique aromatique ; et une unité diamine comprenant au moins l'une d'une unité diamine aliphatique et d'une unité diamine alicyclique.

**3.** Composition de résine thermoplastique selon la revendication 1, dans laquelle la résine polyamide aromatique (A) comprend au moins l'un d'un polyamide (PA6T/66) composé d'hexaméthylène téréphthalamide et d'hexaméthylène adipamide et d'un polyamide (PA6T/DT) composé d'hexaméthylène téréphthalamide et de 2-méthylpentaméthylène téréphthalamide.

**4.** Composition de résine thermoplastique selon la revendication 1, dans laquelle la résine polyamide aliphatique (B) comprend au moins l'un du polyamide 6 et du polyamide 66.

**5.** Composition de résine thermoplastique selon la revendication 1, dans laquelle la résine polyamide aromatique (A) et la résine polyamide aliphatique (B) ; et la résine de sulfure de polyphénylène (C) sont présentes dans un rapport pondéral allant de 3 : 1 à 50 : 1.

**6.** Composition de résine thermoplastique selon la revendication 1, dans laquelle l'agent ignifuge à base de phosphore (D) comprend au moins l'un du phosphore rouge, d'un composé phosphate, d'un composé phosphonate, d'un composé phosphinate, d'un composé oxyde de phosphine, d'un composé phosphazène et de sels métalliques de ceux-ci.

**7.** Composition de résine thermoplastique selon la revendication 1, dans laquelle l'agent chélateur (E) comprend au moins un ion métallique d'ions sodium (Na), aluminium (Al), fer (Fe), cuivre (Cu), zinc (Zn), étain (Sn), titane (Ti), nickel (Ni), antimoine (Sb), magnésium (Mg), vanadium (V), chrome (Cr) et zirconium (Zr).

**8.** Composition de résine thermoplastique selon la revendication 1, dans laquelle l'agent chélateur (E) comprend au moins l'un de l'acide éthylènediamine-N,N,N',N'-tétraacétique (EDTA), de l'acide éthylèneglycol bis(2-aminoéthyléther)-N,N,N',N'-tétraacétique (EGTA), de l'acide trans-1,2-diaminocyclohexane-N,N,N',N'-tétraacétique (CyDTA), de l'acide diéthylène triamine pentaacétique (DTPA), de l'acide triéthylènetétraamine-N,N,N',N",N‴,N‴-hexaacétique (TETHA), de l'acide N-(2-hydroxyéthyl)éthylènediamine triacétique (HEDTA) et de sels métalliques de ceux-ci.

**9.** Composition de résine thermoplastique selon la revendication 1, dans laquelle les fibres de verre (F) ont un rapport d'aspect allant de 1 à 1,5 en section transversale.

**10.** Article moulé produit à partir de la composition de résine thermoplastique selon l'une quelconque des revendications 1 à 9.

**11.** Article moulé selon la revendication 10, dans lequel l'article moulé a une résistance à la traction satisfaisant la Relation 1.

[Relation 1]

$$1500 \text{ kgf/cm}^2 \leq TS \leq 2500 \text{ kgf/cm}^2,$$

où TS indique la résistance à la traction ($kgf/cm^2$) de l'article moulé, telle que mesurée à un taux de traction de 5 mm/min selon la norme ASTM D638.

**12.** Article moulé selon la revendication 10, dans lequel l'article moulé a un taux de rétention de la résistance à la traction de 70% ou plus après vieillissement à 200°C pendant 500 heures, tel que calculé par l'Équation 2.

[Équation 2]

$$\text{Taux de rétention de la résistance à la traction (\%)} = |(TS2 - TS1)| \times 100,$$

où TS1 indique la résistance à la traction initiale ($kgf/cm^2$) d'un échantillon, telle que mesurée à 5 mm/min selon la norme ASTM D638, et TS2 indique la résistance à la traction ($kgf/cm^2$) de l'échantillon, telle que mesurée à 5 mm/min selon la norme ASTM D638 après vieillissement de l'échantillon à 200°C pendant 500 heures.

**13.** Article moulé selon la revendication 10, dans lequel l'article moulé a une ininflammabilité de V-0 ou plus, telle que mesurée sur un échantillon de 3,2 mm d'épaisseur selon la norme UL-94, et un indice de cheminement comparatif (CTI) de 250 V ou plus, tel que mesuré sur un échantillon de 3 mm d'épaisseur selon la norme CEI 60112.

**14.** Article moulé selon la revendication 10, dans lequel l'article moulé a une résistance à la rupture de l'isolant allant de 30 KV/mm à 45 kV/mm, telle que mesurée sur un échantillon de 1 mm d'épaisseur selon la norme ASTM D149.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2009275683 A1
- US 2012196962 A1
- KR 1020100018542